# EUROPEAN PATENT SPECIFICATION

(11) **EP 0 398 056 B1**
(45) Date of publication and mention of the grant of the patent: **30.03.1994**
(21) Application number: 90108085.3
(22) Date of filing: 27.04.1990
(51) Int. Cl.: H04Q 7/04, H04B 7/26, H04B 1/40

(54) **circuit arrangement in a GSM mobile phone of the pan-european digital mobile telephone system**
Schaltungsanordnung in einem GSM-Mobiltelefon des paneuropäischen digitalen Mobiltelefons
Dispositif pour téléphone mobile GSM du système de téléphone mobile numérique paneuropéen

(30) Priority: 17.05.1989 FI 892371
(43) Date of publication of application: 22.11.1990
(73) Proprietor: NOKIA MOBILE PHONES LTD., 24101 Salo (FI)
(72) Inventor: Kiema, Arto, SF-24130 Salo (FI)
(74) Representative: Frain, Timothy John

(56) References cited:
- EP-A- 0 189 822
- EP-A- 0 295 373
- NACHRICHTENTECHNISCHE ZEIT-SCHRIFT, vol. 41, no. 11, 1988, VDE-VERLAG, Berlin, Manfred Böhm: "Das mobile Funktelefon im Aufbruch", pages 612-617

## Description

The invention relates to the pan-european digital mobile telephone system (GSM, Groupe Spécial Mobile)(c.f. for example the document "Nachrichtentechnische Zeitschrift", vol 41, no. 11, 1988, pages 612-617), and more particularly to a mobile phone in accordance with the preamble of claim 1.

Standards have been defined governing the development of the system and devices in the evolving GSM system. Some of these standards concern especially terminal equipment and mobile phones of the GSM network. Thus the most important features of information transmission are defined, such as the functions for coding and encryption of the information to be transmitted on the radio channel. In practice the information may comprise speech and/or data.

In order to be able to process all kinds of information or useful signals that may occur, the mobile phone must be equipped with sufficient capacity for this purpose, for example for the processing of signals from a data terminal connected to the mobile phone.

In the GSM system the signals are transmitted on a radio channel as "bursts" for each individual telephone, the length of a burst being 114 useful bits. The coding methods for the signals in this system have been described in various standards, e.g. in CEPT publications, and therefore these known details are not dealt with here. It suffices to note that depending on the nature of the useful signal, the signals are interleaved into several frames of 114 bits. Moreover, control information (FACCH) is transmitted in parallel with the useful signals in the system.

When the useful signal comprises speech, a predetermined time interval (20 ms) is divided into 8 slots, which will be transmitted at different times on the radio channel. Thus the interleaving depth for speech is 8.

When the useful signal comprises data, a predetermined number of data bits will be distributed into slots, maximum 19 slots, which will be transmitted at different instances on the radio channel. Thus the interleaving depth for data is 19. (The interleaving depth required for data may vary depending on the data signal rate).

The circuit arrangement must be dimensioned in accordance with the extreme cases, because a mobile phone must be able to receive all kinds of useful signals. If a mobile phone is realized in a straightforward manner in accordance with the extreme case, there will be a disadvantage in an increased need for signal processing memory. This will lead to an unfavourably high power consumption. The memory size also represents a considerable cost item in a mobile phone.

The object of the present invention is thus to provide a means to obviate the mentioned disadvantages.

The solution to this problem is presented in the characterizing part of claim 1. Further preferred embodiments are presented in the subclaims.

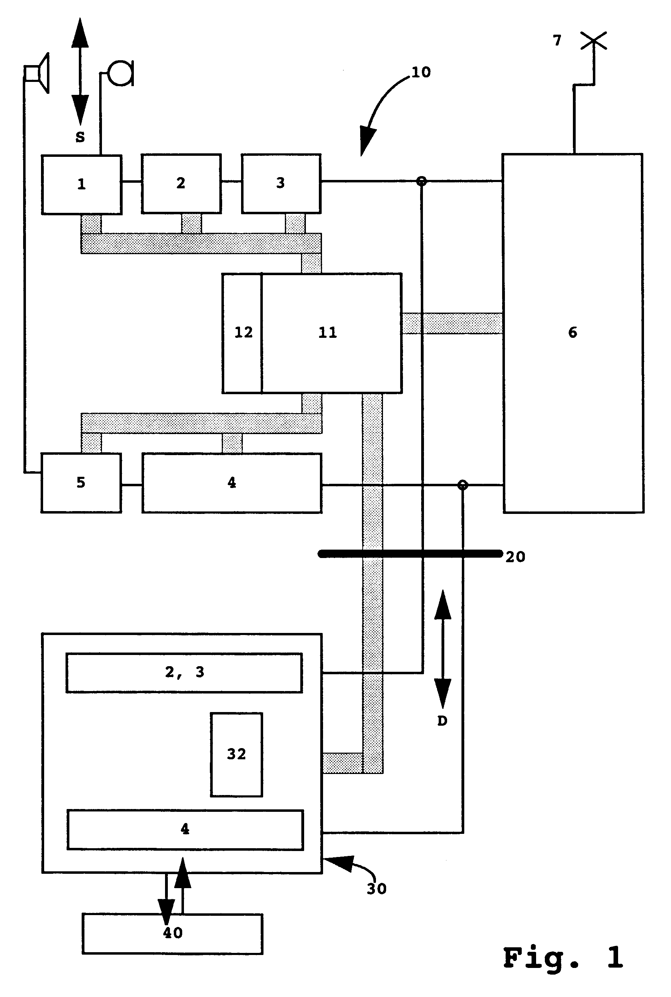

The invention is described below referring to a drawing where the single figure shows as a block diagram the functional modules of a mobile phone and their interconnections.

A mobile phone (MS, Mobile station) is generally shown as 10 in the figure. The block diagram shows the logical function modules in principle for this description, and it does not directly correspond to the physical construction of the equipment. A person skilled in the art will appreciate that the shown function modules can be realized with logic circuitry in various ways. The control buses and the signal wires shown in the figure may constitute parts of the same hardware data buses.

The most important function modules of a mobile phone are: the speech coding 1, the channel coding 2 and the interleaving 3 in the signal transmission direction; the disassembling of the interleaving and the channel decoding 4 and the speech decoding 5 in the signal reception direction. The interleaved signals of the modules 3 and 4 are connected with a rate of 22,8 kbit/s (GSM standard) to the transmitter/receiver module 6 connected to an antenna 7 for transmission of the useful signal (speech S, data D) on the radio channel. The module 6 includes various functions, such as detection and decoding in the receiving direction, as well as other transmit/receive functions.

The functions of the mobile phone are controlled with a microprocessor central processing unit 11 (CPU) connected to other function modules through the control bus. The CPU includes a memory 12 for the signal processing. A data terminal 40 may be connected to the mobile phone.

The memory 12 is a random access memory or RAM, with a size determined mainly by the interleaving depth of the signals. (As to the principles of the signal coding reference is made to the GSM standards). When the length of the signal burst is 114 bits and the maximum interleaving depth is 19 + 8, the requirement for disassembling the interleaving is 27 x 114 = 3078 bits, and considering the word width of 4 bits, the total requirement is 3078 x 4 = 12312 bits. On the other hand (8 + 4) x 114 x 4 = 5472 bits would suffice for speech only (minimum case). The disassembling of the interleaving will use the most part of the RAM.

The RAM is also required for the interleaving. The maximum requirement is 27 x 114 = 3078 bits, for speech it is only 12 x 114 = 1368 bits (minimum case). Depending on the programming of the mobile phone small amounts of memory is needed for other functions as well.

The basic idea of the invention is to limit the size of the memory 12 of the basic unit 10 in such a way that it will be sufficient for the processing of a speech signal, that is to limit it to the previously mentioned minimum values.

According to the invention the basic unit is provided with a connector 20 for a fast bus, to which a data adapter 30 or an auxiliary unit 30 can be connected when required. Concerning the signals the adapter 30 is connected through the interface 20 in parallel to the modules 3 and 4. The rate of the signals in this interface is 22,8 kbit/s. There is a control bus from the CPU to the adapter 30.

For the signal processing the adapter 30 comprises substantially the same modules as the basic unit 10 (the function modules 1 and 5 are not required in the adapter, which will not transmit speech). A data terminal 40 can be connected to the mobile phone through the adapter in order to transmit data signals D.

In accordance with the GSM protocol the CPU will recognize the nature of the received signal, using the control signals transmitted on the radio channel, and thus the received data signals D can be switched to the module 4 of the auxiliary unit 30, and correspondingly the speech signals to the module 4 of the basic unit.

According to the invention a processing memory 32 required for the data transmission is provided in the adapter 30, whereby the CPU will see this memory as a replacement for the RAM 12 or an extension of it. In this case the size of the memory 12 may be e.g. about 7000 bits, the size of the memory 32 being about 16000 bits. Thus in the basic unit a saving of about 9000 bits is achieved.

It should be noticed, that the saving of memory may also be considered concerning the read-only memory (ROM), whereby a memory size required for speech processing only is left in the basic unit. A memory size required by the respective data signal D is provided in the adapter 30.

In a mobile phone according to the invention substantial cost benefits are achieved, due to the reduced number of components in the basic unit. A smaller memory also consumes less power, which is a considerable benefit in a mobile phone depending on battery power.

The auxiliary unit or the terminal adapter 30 is provided with the required amount of memory and other functions in accordance with the respective data signal D. The terminal adapter may comprise a separate unit, which is connected to the basic unit through the connection 20, for example with a cable. Alternatively, the auxiliary unit could be arranged as a component and/or a circuit board and connected directly to a connector inside the basic unit.

## Claims

1. A circuit arrangement for a digital (GSM) radio telephone comprising speech coding means (1), channel coding means (2) and interleaving means (3) for processing voice signals in a transmission direction and corresponding de-interleaving and channel decoding means (4) and speech decoding means (5) in a receive direction for processing received speech signals, thereby forming a radio telephone basic unit (10) and a transmit/receive function module (6) coupled to an antenna (7), characterized in that the radio telephone basic unit (10) is provided with a processing memory (12) for processing speech signals (S), and is adapted to be coupled via an interface means (20) to an auxiliary unit (30) for processing non-speech data signals (D), said auxiliary unit (30) comprising channel coding means and interleaving means, and channel decoding means and de-interleaving means in the transmission and receive directions respectively, and a processing memory (32) comprising the capacity to facilitate processing of the non-speech data signals (D).

2. A circuit arrangement according to claim 1, characterized in that the functions of the radio telephone basic unit (10) are controlled by a microprocessor central unit (11), connected to a memory (12) for signal processing.

3. A circuit arrangement according to claim 1 or claim 2, characterized in that the interface means (20) comprises a fast bus interface.

4. A circuit arrangement according to any preceding claim, characterized in that the signal processing memories (12, 32) are random access memories (RAM).

5. A circuit arrangement according to any preceding claim, characterized in that the rate of the signals (S, D) transmitted through the interface (20) is 22,8 kbits/s.

6. A circuit arrangement according to any preceding claim, characterized in that the non-speech data signals (D) are data transmitted on a radio channel.

7. A circuit arrangement according to any preceding claim, characterized in that the signal processing memory (12, 32) is primarily concerned with channel decoding and disassembling of a received signal, and the capacity of the processing memory (12) of the radio telephone basic unit (10) is less than half the capacity of the processing memory (32) of the auxiliary unit (30), when the non-speech data signals comprise an interleaving depth of 19.

8. A circuit arrangement according to any preceding claim, characterized in that the auxiliary unit (30) is a plug-in unit adapted to be coupled to the digital radio telephone.

9. A circuit arrangement according to any preceding claim, characterized in that the auxiliary unit (30) is a separate adapter for a data terminal (40) adapted to be coupled to the digital radio telephone.

## Patentansprüche

1. Schaltungsanordnung für ein digitales (GSM-)Funkfernsprechgerät, welches umfaßt Sprachkodiermittel (1), Kanalkodiermittel (2) und Verschachtelungsmittel (3) zum Bearbeiten von Sprachsignalen in einer Senderichtung und entsprechendes Entschachtel- und Kanaldekodiermittel (4) sowie Sprachdekodiermittel (5) in einer Empfangsrichtung zum Bearbeiten empfangener Sprachsignale, um dadurch eine Funkfernsprech-Grundeinheit (10) und ein mit einer Antenne (7) gekoppeltes Sende/Empfangs-Funktionsmodul (6) zu bilden, dadurch gekennzeichnet, daß die Funkfernsprech-Grundeinheit (10) mit einem Bearbeitungsspeicher (12) zum Bearbeiten von Sprachsignalen (S) versehen und ausgelegt ist, über ein Schnittstellenmittel (20) mit einer Hilfseinheit (30) zum Bearbeiten von Nichtsprach-Datensignalen (D) gekoppelt zu werden, welche Hilfseinheit (30) umfaßt Kanalkodierungsmittel und Verschachtelungsmittel, und Kanaldekodierungsmittel und Entschachtelungsmittel in der Sende- bzw. Empfangsrichtung, und einen Bearbeitungsspeicher (32), der die Kapazität enthält, die eine Bearbeitung der Nichtsprach-Datensignale (D) ermöglicht.

2. Schaltungsanordnung nach Anspruch 1, dadurch gekennzeichnet, daß die Funktionen der Funkfernsprech-Grundeinheit (10) durch eine Mikroprozessor-Zentraleinheit (11) gesteuert werden, die mit einem Speicher (12) zur Signalbearbeitung verbunden ist.

3. Schaltungsanordnung nach Anspruch 1 oder 2, dadurch gekennzeichnet, daß das Schnittstellenmittel (20) eine Schnellbus-Schnittstelle umfaßt.

4. Schaltungsanordnung nach einem der vorangehenden Ansprüche, dadurch gekennzeichnet, daß die Signalbearbeitungsspeicher (12, 32) Speicher mit wahlfreiem Zugriff (RAM) sind.

5. Schaltungsanordnung nach einem der vorangehenden Ansprüche, dadurch gekennzeichnet, daß die Rate der durch die Schnittstelle (20) übertragenen Signale (S, D) 22,8 kbit/s beträgt.

6. Schaltungsanordnung nach einem der vorangehenden Ansprüche, dadurch gekennzeichnet, daß die Nichtsprach-Datensignale (D) an einem Funkkanal gesendete Daten sind.

7. Schaltungsanordnung nach einem der vorangehenden Ansprüche, dadurch gekennzeichnet, daß der Signalbearbeitungsspeicher (12, 32) in erster Linie mit Kanaldekodierung und Umordnung eines empfangenen Signals befaßt ist, und die Kapazität des Bearbeitungsspeichers (12) der Funkfernsprech-Grundeinheit (10) weniger als die Hälfte der Kapazität des Bearbeitungsspeichers (32) der Hilfseinheit (30) ausmacht, wenn die Nichtsprach-Datensignale eine Verschachtelungstiefe von 19 umfassen.

8. Schaltungsanordnung nach einem der vorangehenden Ansprüche, dadurch gekennzeichnet, daß die Hilfseinheit (30) eine zur Kopplung mit dem digitalen Funkfernsprechgerät ausgelegte Einsteckeinheit ist.

9. Schaltungsanordnung nach einem der vorangehenden Ansprüche, dadurch gekennzeichnet, daß die Hilfseinheit (30) ein separater Adapter für ein Datenterminal (40) ist, das zur Kopplung mit dem digitalen Funkfernsprechgerät ausgelegt ist.

## Revendications

1. Disposition de circuit pour un téléphone radio numérique (GSM) comprenant un moyen de codage de la parole (1), un moyen de codage de canal (2) et un moyen d'entrelacement (3) pour traiter des signaux vocaux dans une direction d'émission et pour désentrelacer un moyen correspondant de désentrelaçage et de décodage de canal (4) et un moyen de décodage de parole (5) dans une direction de réception pour traiter les signaux vocaux reçus, formant de ce fait une unité de base de radiotéléphone (10) et un module de fonction d'émission/réception (6) couplé à une antenne (7), caractérisée en ce que l'unité de base du radiotéléphone (10) est prévue avec une mémoire de traitement (12) pour le traitement des signaux vocaux (S) et est prévue pour être couplée par l'intermédiaire d'un moyen d'interface (20) à une unité auxiliaire (30) pour traiter les signaux de données non vocaux (D), l'unité auxiliaire (30) comprenant un moyen de codage de canal et un moyen d'entrelacement, et un moyen de décodage de canal et un moyen de désentrelacement dans les directions d'émission et de réception respectivement, et une mémoire de traitement (32) comprenant la capacité nécessaire pour faciliter le traitement des signaux de données non vocaux (D).

2. Disposition de circuit selon la revendication 1, caractérisée en ce que les fonctions de l'unité de base radiotéléphone (10) sont commandées par une unité centrale à microprocesseur (11), connectée à une mémoire (12) pour le traitement des signaux.

3. Disposition de circuit selon la revendication 1 ou la revendication 2, caractérisée en ce que le moyen d'interface (20) comprend une interface de bus rapide.

4. Disposition de circuit selon l'une quelconque des revendications précédentes, caractérisée en ce que les mémoires de traitement de signaux (12, 32) sont des mémoires vives (MEV).

5. Disposition de circuit selon l'une quelconque des revendications précédentes, caractérisée en ce que le débit des signaux (S, D) transmis à travers l'interface (20) est de 22,8 kbits/s.

6. Disposition de circuit selon l'une quelconque des revendications précédentes, caractérisée en ce que les signaux de données non vocaux (D) sont des données transmises sur un canal radio.

7. Disposition de circuit selon l'une quelconque des revendications précédentes, caractérisée en ce que la mémoire de traitement de signaux (12, 32) se rapporte principalement au décodage du canal et au désassemblage du signal reçu, et la capacité de la mémoire de traitement (12) de l'unité de base radiotéléphone (10) est inférieure à la moitié de la capacité de la mémoire de traitement (32) de l'unité auxiliaire (30) lorsque les signaux de données non vocaux comprennent une profondeur d'entrelacement de 19.

8. Disposition de circuit selon l'une quelconque des revendications précédentes, caractérisée en ce que l'unité auxiliaire (30) est une unité enfichable prévue pour être couplée au radiotéléphone numérique.

9. Disposition de circuit selon l'une quelconque des revendications précédentes, caractérisée en ce que l'unité auxiliaire (30) est un adaptateur séparé pour un terminal de données (40) prévu pour être couplé au radiotéléphone numérique.
